# EUROPÄISCHE PATENTSCHRIFT

(11) **EP 0 931 100 B1**
(45) Veröffentlichungstag und Bekanntmachung des Hinweises auf die Patenterteilung: **19.12.2001**
(21) Anmeldenummer: 97943881.9
(22) Anmeldetag: 23.09.1997
(51) Int. Cl.: C08F 12/04

(54) **KATALYSATORSYSTEME, ENTHALTEND METALLKOMPLEXE MIT ADAMANTANÄHNLICHER STRUKTUR**
CATALYTIC PATTERNS CONTAINING METAL COMPLEXES WITH AN ADAMANTANE-LIKE STRUCTURE
SYSTEME CATALYSEURS CONTENANT DES COMPLEXES METALLIQUES D'UNE STRUCTURE SIMILAIRE A L'ADAMANTANE

(30) Priorität: 14.10.1996 DE 19642353
(43) Veröffentlichungstag der Anmeldung: 28.07.1999
(73) Patentinhaber: BASF AKTIENGESELLSCHAFT, 67056 Ludwigshafen (DE)
(72) Erfinder: GEPRÄGS, Michael, D-67240 Bobenheim-Roxheim (DE); STÜRMER, Rainer, D-67127 Rödersheim (DE); WEISS, Horst, D-76139 Karlsruhe (DE); STEIGER, Susanne, D-67354 Römerberg (DE)
(86) Internationale Anmeldenummer: EP9705201
(87) Internationale Veröffentlichungsnummer: WO9816564

(56) Entgegenhaltungen:
- EP-A- 0 271 874

## Beschreibung

Die vorliegende Erfindung betrifft Katalysatorsysteme, enthaltend als aktive Bestandteile
A) Metallkomplexe der allgemeinen Formel I 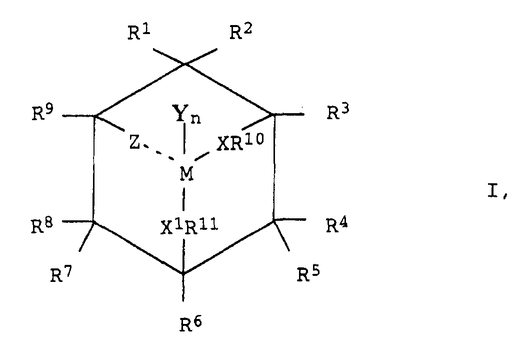 in der die Substituenten folgende Bedeutung haben:
   - M: ein Metall der III., IV., V. oder VI. Nebengruppe des Periodensystems der Elemente oder ein Metall der Lanthanoidenreihe,
   - Y: ein negatives Abgangsatom oder eine negative Abgangsgruppe,
   - X und X¹: ein negativ geladenes oder neutrales Atom der IV., V. oder VI. Hauptgruppe des Periodensystems der Elemente,
   - Z: Wasserstoff, C₁- bis C₁₀-Alkyl, C₃- bis C₁₀-Cycloalkyl, C₁- bis C₁₀-Alkoxy, C₁- bis C₁₀-Alkylthiolat oder Dialkylamid mit jeweils 1 bis 4 C-Atomen im Alkylrest,
   - R¹ bis R¹¹: Wasserstoff, kohlenstofforganische oder siliciumorganische Reste,
   - n: 0, 1 oder 2
   und
   die Wertigkeit von M (2+n) ist
   und
B) eine metalloceniumionenbildende Verbindung.
   Weiterhin betrifft die vorliegende Erfindung die Verwendung solcher Katalysatorsysteme zur Polymerisation von olefinisch ungesättigten Verbindungen, Verfahren zur Herstellung von Polymerisaten von vinylaromatischen Verbindungen mit Hilfe dieser Katalysatorsysteme sowie die hierbei erhältlichen Polymerisate.
   Zur Polymerisation von olefinisch ungesättigten Verbindungen sind Metallocenkomplexe als Bestandteile von Katalysatorkomplexen bekannt. In der WO 95/06071 sind beispielsweise heterofunktionelle, Cyclopentadienylreste enthaltende Verbindungen beschrieben. Diese Klasse von Verbindungen vermag jedoch nicht, eine Kettenübertragung durch β-Hydrid-Eliminierung wirkungsvoll zu unterdrücken, was zu einem frühzeitigen Abbruch der Polymerisation und dadurch zu limitierten Molekulargewichten führt.
   Aus der DE-A 44 20 783 sind heterofunktionelle, cyclopentadienylfreie Verbindungen bekannt, die allerdings eine offene Katalysatorstruktur aufweisen und daher nicht stereoselektiv sind bzw. eine Kettenübertragung durch β-Hydrid-Eliminierung begünstigen.
   Der vorliegenden Erfindung lag daher die Aufgabe zugrunde, neue Katalysatorsysteme zur Verfügung zu stellen, die zur Polymerisation von vinylaromatischen Verbindungen eingesetzt werden können und dabei eine β-Hydrid-Eliminierung wirkungsvoll unterdrücken und stereoselektiv sind. Zudem sollen die gebildeten Polymerisate ein hohes Molekulargewicht aufweisen und einen hohen Anteil an syndiotaktischer Struktur.
   Demgemäß wurden die eingangs definierten Katalysatorsysteme gefunden.
   Weiterhin wurden die Verwendung solcher Katalysatorsysteme zur Polymerisation von olefinisch ungesättigten Verbindungen, Verfahren zur Herstellung von Polymerisaten von vinylaromatischen Verbindungen mit Hilfe dieser Katalysatorsysteme sowie die hierbei erhältlichen Polymerisate gefunden.
   Die erfindungsgemäßen Katalysatorsysteme enthalten als Komponente A) Metallkomplexe der allgemeinen Formel I.
   Von den Metallkomplexen der allgemeinen Formel I sind diejenigen bevorzugt, in denen die Substituenten folgende Bedeutung aufweisen:
   - M: ein Metall der IV. oder V. Nebengruppe des Periodensystems der Elemente, vorzugsweise ein Metall der IV. Nebengruppe, also Titan, Zirkon oder Hafnium, insbesondere Titan,
   - Y: Wasserstoff, C₁- bis C₁₀-Alkyl, C₃- bis C₁₀-Cycloalkyl, C₁- bis C₁₀-Alkoxy, Dialkylamid, Alkylaryl, Arylalkyl, Halogenalkyl oder Halogenaryl mit jeweils 1 bis 10 C-Atomen im Alkylrest und 6 bis 20 C-Atomen im Arylrest oder Fluor, Chlor, Brom oder Iod, vorzugsweise C₁- bis C₄-Alkyl, C₁- bis C₄-Alkoxy oder Chlor, insbesondere Methyl, iso-Butyl, Methoxy, iso-Propoxy oder Chlor,
   - X und X¹: ein negativ geladenes Atom der V. oder VI. Hauptgruppe des Periodensystems der Elemente, vorzugsweise N, P, O oder S als Anion,
   - Z: Wasserstoff, C₁- bis C₄-Alkyl oder C₃- bis C₆-Cycloalkyl, vorzugsweise Wasserstoff, Methyl, Ethyl, n-Propyl oder Cyclohexyl,
   - R¹ bis R¹¹: Wasserstoff, C₁- bis C₁₀-Alkyl, C₃- bis C₁₀-Cycloalkyl, C₆- bis C₂₀-Aryl, Alkylaryl, Arylalkyl, Halogenalkyl oder Halogenaryl mit jeweils 1 bis 10 C-Atomen im Alkylrest und 6 bis 20 C-Atomen im Arylrest oder Fluor, Chlor, Brom oder Iod, oder wobei zwei benachbarte Reste gemeinsam für 4 bis 5 C-Atome aufweisende cyclische Gruppen stehen können, oder Si(R¹²)₃ mit
   - R¹²: C₁- bis C₁₀-Alkyl, C₃- bis C₁₀-Cycloalkyl oder C₆- bis C₁₅-Aryl,

   vorzugsweise stehen R¹ bis R¹¹ für Wasserstoff oder C₁- bis C₁₀-Alkyl, insbesondere
   - R¹ bis R⁸: für Wasserstoff, Methyl oder Ethyl,
   - R9: für Wasserstoff, Methyl, Ethyl oder n-Propyl und
   - R¹⁰ und R¹¹: für Methyl, Ethyl, n-Propyl oder iso-Propyl,
   - n: bedeutet vorzugsweise die Zahl 2, so daß die Wertigkeit von M vorzugsweise +4 ist.

   Beispiele für besonders bevorzugte Metallkomplexe der allgemeinen Formel I sind:
   5,5-Dimethyl-1,3-di(methylamido)cyclohexantitandichlorid
   5,5-Diethyl-1,3-di(methylamido)cyclohexantitandichlorid
   5,5-Dipropyl-1,3-di(methylamido)cyclohexantitandichlorid
   5,5-Diisopropyl-1,3-di(methylamido)cyclohexantitandichlorid
   5,5-Dibutyl-1,3-di(methylamido)cyclohexantitandichlorid
   5,5-Di-sec.-butyl-1,3-di(methylamido)cyclohexantitandichlorid
   5,5-Di-tert.-butyl-1,3-di(methylamido)cyclohexantitandichlorid
   5,5-Dimethyl-1,3-di(ethylamido)cyclohexantitandichlorid
   5,5-Diethyl-1,3-di(ethylamido)cyclohexantitandichlorid
   5,5-Dipropyl-1,3-di(ethylamido)cyclohexantitandichlorid
   5,5-Diisopropyl-1,3-di(ethylamido)cyclohexantitandichlorid
   5,5-Di-sec.-butyl-1,3-di(ethylamido)cyclohexantitandichlorid
   5,5-Di-tert.-butyl-1,3-di(ethylamido)cyclohexantitandichlorid
   5,5-Dimethyl-1,3-di(propylamido)cyclohexantitandichlorid
   5,5-Diethyl-1,3-di(propylamido)cyclohexantitandichlorid
   5,5-Dipropyl-1,3-di(propylamido)cyclohexantitandichlorid
   5,5-Diisopropyl-1,3-di(propylamido)cyclohexantitandichlorid
   5,5-Dibutyl-1,3-di(propylamido)cyclohexantitandichlorid
   5,5-Di-sec.-butyl-1,3-di(propylamido)cyclohexantitandichlorid
   5,5-Di-tert.-butyl-1,3-di(propylamido)cyclohexantitandichlorid
   5,5-Dimethyl-1,3-di(propylamido)cyclohexantitandichlorid
   5,5-Diethyl-1,3-di(isopropylamido)cyclohexantitandichlorid
   5,5-Dipropyl-1,3-di(isopropylamido)cyclohexantitandichlorid
   5,5-Diisopropyl-1,3-di(isopropylamido)cyclohexantitandichlorid
   5,5-Dibutyl-1,3-di(isopropylamido)cyclohexantitandichlorid
   5,5-Di-sec.-butyl-1,3-di(isopropylamido)cyclohexantitandichlorid
   5,5-Di-tert.-butyl-1,3-di(isopropylamido)cyclohexantitandichlorid
   5,5-Dimethyl-l,3-di(butylamido)cyclohexantitandichlorid
   5,5-Diethyl-1,3-di(butylamido)cyclohexantitandichlorid
   5,5-Dipropyl-1,3-di(butylamido)cyclohexantitandichlorid
   5,5-Diisopropyl-1,3-di(butylamido)cyclohexantitandichlorid
   5,5-Dibutyl-1,3-di(butylamido)cyclohexantitandichlorid
   5,5-Di-sec.-butyl-1,3-di(butylamido)cyclohexantitandichlorid
   5,5-Di-tert.-butyl-1,3-di(butylamido)cyclohexantitandichlorid
   5,5-Dimethyl-1,3-di(methylamido)cyclohexantitandimethyl
   5,5-Diethyl-1,3-di(methylamido)cyclohexantitandimethyl
   5,5-Dipropyl-1,3-di(methylamido)cyclohexantitandimethyl
   5,5-Diisopropyl-1,3-di(methylamido)cyclohexantitandimethyl
   5,5-Dibutyl-1,3-di(methylamido)cyclohexantitandimethyl
   5,5-Di-sec.-butyl-1,3-di(methylamido)cyclohexantitandimethyl
   5,5-Di-tert.-butyl-1,3-di(methylamido)cyclohexantitandimethyl
   5,5-Dimethyl-1,3-di(ethylamido)cyclohexantitandimethyl
   5,5-Diethyl-1,3-di(ethylamido)cyclohexantitandimethyl
   5,5-Dipropyl-1,3-di(ethylamido)cyclohexantitandimethyl
   5,5-Diisopropyl-l,3-di(ethylamido)cyclohexantitandichlorid
   5,5-Di-sec.-butyl-1,3-di(ethylamido)cyclohexantitandimethyl
   5,5-Di-tert.-butyl-1,3-di(ethylamido)cyclohexantitandimethyl
   5,5-Dimethyl-1,3-di(propylamido)cyclohexantitandimethyl
   5,5-Diethyl-1,3-di(propylamido)cyclohexantitandimethyl
   5,5-Dipropyl-1,3-di(propylamido)cyclohexantitandimethyl
   5,5-Diisopropyl-1,3-di(propylamido)cyclohexantitandimethyl
   5,5-Dibutyl-1,3-di(propylamido)cyclohexantitandimethyl
   5,5-Di-sec.-butyl-1,3-di(propylamido)cyclohexantitandimethyl
   5,5-Di-tert.-butyl-1,3-di(propylamido)cyclohexantitandimethyl
   5,5-Dimethyl-1,3-di(propylamido)cyclohexantitandimethyl
   5,5-Diethyl-1,3-di(isopropylamido)cyclohexantitandimethyl
   5,5-Dipropyl-1,3-di(isopropylamido)cyclohexantitandimethyl
   5,5-Diisopropyl-1,3-di(isopropylamido)cyclohexantitandimethyl
   5,5-Dibutyl-1,3-di(isopropylamido)cyclohexantitandimethyl
   5,5-Di-sec.-butyl-1,3-di(isopropylamido)cyclohexantitandimethyl
   5,5-Di-tert.-butyl-1,3-di(isopropylamido)cyclohexantitandimethyl
   5,5-Dimethyl-1,3-di(butylamido)cyclohexantitandimethyl
   5,5-Diethyl-1,3-di(butylamido)cyclohexantitandimethyl
   5,5-Dipropyl-1,3-di(butylamido)cyclohexantitandimethyl
   5,5-Diisopropyl-1,3-di(butylamido)cyclohexantitandimethyl
   5,5-Dibutyl-1,3-di(butylamido)cyclohexantitandimethyl
   5,5-Di-sec.-butyl-1,3-di(butylamido)cyclohexantitandimethyl
   5,5-Di-tert.-butyl-1,3-di(butylamido)cyclohexantitandimethyl
   5,5-Dimethyl-1,3-di(methylamido)cyclohexantitandiisopropoxid
   5,5-Diethyl-1,3-di(methylamido)cyclohexantitandiisopropoxid
   5,5-Dipropyl-1,3-di(methylamido)cyclohexantitandiisopropoxid
   5,5-Diisopropyl-1,3-di(methylamido)cyclohexantitandiisopropoxid
   5,5-Dibutyl-1,3-di(methylamido)cyclohexantitandiisopropoxid
   5,5-Di-sec.-butyl-1,3-di(methylamido)cyclohexantitandiisopropoxid
   5,5-Di-tert.-butyl-1,3-di(methylamido)cyclohexantitandiisopropoxid
   5,5-Dimethyl-1,3-di(ethylamido)cyclohexantitandiisopropoxid
   5,5-Diethyl-1,3-di(ethylamido)cyclohexantitandiisopropoxid
   5,5-Dipropyl-1,3-di(ethylamido)cyclohexantitandiisopropoxid
   5,5-Diisopropyl-1,3-di(ethylamido)cyclohexantitandiisopropoxid
   5,5-Di-sec.-butyl-1,3-di(ethylamido)cyclohexantitandiisopropoxid
   5,5-Di-tert.-butyl-1,3-di(ethylamido)cyclohexantitandiisopropoxid
   5,5-Dimethyl-1,3-di(propylamido)cyclohexantitandiisopropoxid
   5,5-Diethyl-1,3-di(propylamido)cyclohexantitandiisopropoxid
   5,5-Dipropyl-1,3-di(propylamido)cyclohexantitandiisopropoxid
   5,5-Diisopropyl-1,3-di(propylamido)cyclohexantitandiisopropoxid
   5,5-Dibutyl-1,3-di(propylamido)cyclohexantitandiisopropoxid
   5,5-Di-sec.-butyl-1,3-di(propylamido)cyclohexantitandiisopropoxid
   5,5-Di-tert.-butyl-1,3-di(propylamido)cyclohexantitandiisopropoxid
   5,5-Dimethyl-1,3-di(propylamido)cyclohexantitandiisopropoxid
   5,5-Diethyl-1,3-di(isopropylamido)cyclohexantitandiisopropoxid
   5,5-Dipropyl-1,3-di(isopropylamido)cyclohexantitandiisopropoxid
   5,5-Diisopropyl-1,3-di(isopropylamido)cyclohexantitandiisopropoxid
   5,5-Dibutyl-1,3-di(isopropylamido)cyclohexantitandiisopropoxid
   5,5-Di-sec.-butyl-1,3-di(isopropylamido)cyclohexantitandiisopropoxid
   5,5-Di-tert.-butyl-1,3-di(isopropylamido)cyclohexantitandiisopropoxid
   5,5-Dimethyl-1,3-di(butylamido)cyclohexantitandiisopropoxid
   5,5-Diethyl-1,3-di(butylamido)cyclohexantitandiisopropoxid
   5,5-Dipropyl-1,3-di(butylamido)cyclohexantitandiisopropoxid
   5,5-Diisopropyl-1,3-di(butylamido)cyclohexantitandiisopropoxid
   5,5-Dibutyl-1,3-di(butylamido)cyclohexantitandiisopropoxid
   5,5-Di-sec.-butyl-1,3-di(butylamido)cyclohexantitandiisopropoxid
   5,5-Di-tert.-butyl-1,3-di(butylamido)cyclohexantitandiisopropoxid
   5,5-Dimethyl-1,3-di(methylphosphido)cyclohexantitandichlorid
   5,5-Diethyl-1,3-di(methylphosphido)cyclohexantitandichlorid
   5,5-Dipropyl-1,3-di(methylphosphido)cyclohexantitandichlorid
   5,5-Diisopropyl-1,3-di(methylphosphido)cyclohexantitandichlorid
   5,5-Dibutyl-1,3-di(methylphosphido)cyclohexantitandichlorid
   5,5-Di-sec.-butyl-1,3-di(methylphosphido)cyclohexantitandichlorid
   5,5-Di-tert.-butyl-1,3-di(methylphosphido)cyclohexantitandichlorid
   5,5-Dimethyl-1,3-di(ethylphosphido)cyclohexantitandichlorid
   5,5-Diethyl-1,3-di(ethylphosphido)cyclohexantitandichlorid
   5,5-Dipropyl-1,3-di(ethylphosphido)cyclohexantitandichlorid
   5,5-Diisopropyl-1,3-di(ethylphosphido)cyclohexantitandichlorid
   5,5-Di-sec.-butyl-1,3-di(ethylphosphido)cyclohexantitandichlorid
   5,5-Di-tert.-butyl-1,3-di(ethylphosphido)cyclohexantitandichlorid
   5,5-Dimethyl-1,3-di(propylphosphido)cyclohexantitandichlorid
   5,5-Diethyl-1,3-di(propylphosphido)cyclohexantitandichlorid
   5,5-Dipropyl-1,3-di(propylphosphido)cyclohexantitandichlorid
   5,5-Diisopropyl-1,3-di(propylphosphido)cyclohexantitandichlorid
   5,5-Dibutyl-1,3-di(propylphosphido)cyclohexantitandichlorid
   5,5-Di-sec.-butyl-1,3-di(propylphosphido)cyclohexantitandichlorid
   5,5-Di-tert.-butyl-1,3-di(propylphosphido)cyclohexantitandichlorid
   5,5-Dimethyl-1,3-di(propylphosphido)cyclohexantitandichlorid
   5,5-Diethyl-1,3-di(isopropylphosphido)cyclohexantitandichlorid
   5,5-Dipropyl-1,3-di(isopropylphosphido)cyclohexantitandichlorid
   5,5-Diisopropyl-1,3-di(isopropylphosphido)cyclohexantitandichlorid
   5,5-Dibutyl-1,3-di(isopropylphosphido)cyclohexantitandichlorid
   5,5-Di-sec.-butyl-1,3-di(isopropylphosphido)cyclohexantitandichlorid
   5,5-Di-tert.-butyl-1,3-di(isopropylphosphido)cyclohexantitandichlorid
   5,5-Dimethyl-1,3-di(butylphosphido)cyclohexantitandichlorid
   5,5-Diethyl-1,3-di(butylphosphido)cyclohexantitandichlorid
   5,5-Dipropyl-1,3-di(butylphosphido)cyclohexantitandichlorid
   5,5-Diisopropyl-1,3-di(butylphosphido)cyclohexantitandichlorid
   5,5-Dibutyl-1,3-di(butylphosphido)cyclohexantitandichlorid
   5,5-Di-sec.-butyl-1,3-di(butylphosphido)cyclohexantitandichlorid
   5,5-Di-tert.-butyl-1,3-di(butylphosphido)cyclohexantitandichlorid
   5,5-Dimethyl-1,3-di(methylphosphido)cyclohexantitandimethyl
   5,5-Diethyl-1,3-di(methylphosphido)cyclohexantitandimethyl
   5,5-Dipropyl-1,3-di(methylphosphido)cyclohexantitandimethyl
   5,5-Diisopropyl-1,3-di(methylphosphido)cyclohexantitandimethyl
   5,5-Dibutyl-1,3-di(methylphosphido)cyclohexantitandimethyl
   5,5-Di-sec.-butyl-1,3-di(methylphosphido)cyclohexantitandimethyl
   5,5-Di-tert.-butyl-1,3-di(methylphosphido)cyclohexantitandimethyl
   5,5-Dimethyl-1,3-di(ethylphosphido)cyclohexantitandimethyl
   5,5-Diethyl-1,3-di(ethylphosphido)cyclohexantitandimethyl
   5,5-Dipropyl-1,3-di(ethylphosphido)cyclohexantitandimethyl
   5,5-Diisopropyl-l,3-di(ethylphosphido)cyclohexantitandichlorid
   5,5-Di-sec.-butyl-1,3-di(ethylphosphido)cyclohexantitandimethyl
   5,5-Di-tert.-butyl-1,3-di(ethylphosphido)cyclohexantitandimethyl
   5,5-Dimethyl-1,3-di(propylphosphido)cyclohexantitandimethyl
   5,5-Diethyl-1,3-di(propylphosphido)cyclohexantitandimethyl
   5,5-Dipropyl-1,3-di(propylphosphido)cyclohexantitandimethyl
   5,5-Diisopropyl-1,3-di(propylphosphido)cyclohexantitandimethyl
   5,5-Dibutyl-1,3-di(propylphosphido)cyclohexantitandimethyl
   5,5-Di-sec.-butyl-1,3-di(propylphosphido)cyclohexantitandimethyl
   5,5-Di-tert.-butyl-1,3-di(propylphosphido)cyclohexantitandimethyl
   5,5-Dimethyl-1,3-di(propylphosphido)cyclohexantitandimethyl
   5,5-Diethyl-1,3-di(isopropylphosphido)cyclohexantitandimethyl
   5,5-Dipropyl-1,3-di(isopropylphosphido)cyclohexantitandimethyl
   5,5-Diisopropyl-1,3-di(isopropylphosphido)cyclohexantitandimethyl
   5,5-Dibutyl-1,3-di(isopropylphosphido)cyclohexantitandimethyl
   5,5-Di-sec.-butyl-1,3-di(isopropylphosphido)cyclohexantitandimethyl
   5,5-Di-tert.-butyl-1,3-di(isopropylphosphido)cyclohexantitandimethyl
   5,5-Dimethyl-1,3-di(butylphosphido)cyclohexantitandimethyl
   5,5-Diethyl-1,3-di(butylphosphido)cyclohexantitandimethyl
   5,5-Dipropyl-1,3-di(butylphosphido)cyclohexantitandimethyl
   5,5-Diisopropyl-1,3-di(butylphosphido)cyclohexantitandimethyl
   5,5-Dibutyl-1,3-di(butylphosphido)cyclohexantitandimethyl
   5,5-Di-sec.-butyl-1,3-di(butylphosphido)cyclohexantitandimethyl
   5,5-Di-tert.-butyl-1,3-di(butylphosphido)cyclohexantitandimethyl
   5,5-Dimethyl-1,3-di(methylphosphido)cyclohexantitandiisopropoxid
   5,5-Diethyl-1,3-di(methylphosphido)cyclohexantitandiisopropoxid
   5,5-Dipropyl-1,3-di(methylphosphido)cyclohexantitandiisopropoxid
   5,5-Diisopropyl-1,3-di(methylphosphido)cyclohexantitandiisopropoxid
   5,5-Dibutyl-1,3-di(methylphosphido)cyclohexantitandiisopropoxid
   5,5-Di-sec.-butyl-1,3-di(methylphosphido)cyclohexantitandiisopropoxid
   5,5-Di-tert.-butyl-1,3-di(methylphosphido)cyclohexantitandiisopropoxid
   5,5-Dimethyl-1,3-di(ethylphosphido)cyclohexantitandiisopropoxid
   5,5-Diethyl-1,3-di(ethylphosphido)cyclohexantitandiisopropoxid
   5,5-Dipropyl-1,3-di(ethylphosphido)cyclohexantitandiisopropoxid
   5,5-Diisopropyl-1,3-di(ethylphosphido)cyclohexantitandiisopropoxid
   5,5-Di-sec.-butyl-1,3-di(ethylphosphido)cyclohexantitandiisopropoxid
   5,5-Di-tert.-butyl-1,3-di(ethylphosphido)cyclohexantitandiisopropoxid
   5,5-Dimethyl-1,3-di(propylphosphido)cyclohexantitandiisopropoxid
   5,5-Diethyl-1,3-di(propylphosphido)cyclohexantitandiisopropoxid
   5,5-Dipropyl-1,3-di(propylphosphido)cyclohexantitandiisopropoxid
   5,5-Diisopropyl-1,3-di(propylphosphido)cyclohexantitandiisopropoxid
   5,5-Dibutyl-1,3-di(propylphosphido)cyclohexantitandiisopropoxid
   5,5-Di-sec.-butyl-1,3-di(propylphosphido)cyclohexantitandiisopropoxid
   5,5-Di-tert.-butyl-1,3-di(propylphosphido)cyclohexantitandiisopropoxid
   5,5-Dimethyl-1,3-di(propylphosphido)cyclohexantitandiisopropoxid
   5,5-Diethyl-1,3-di(isopropylphosphido)cyclohexantitandiisopropoxid
   5,5-Dipropyl-1,3-di(isopropylphosphido)cyclohexantitandiisopropoxid
   5,5-Diisopropyl-1,3-di(isopropylphosphido)cyclohexantitandiisopropoxid
   5,5-Dibutyl-1,3-di(isopropylphosphido)cyclohexantitandiisopropoxid
   5,5-Di-sec.-butyl-1,3-di(isopropylphosphido)cyclohexantitandiisopropoxid
   5,5-Di-tert.-butyl-1,3-di(isopropylphosphido)cyclohexantitandiisopropoxid
   5,5-Dimethyl-1,3-di(butylphosphido)cyclohexantitandiisopropoxid
   5,5-Diethyl-1,3-di(butylphosphido)cyclohexantitandiisopropoxid
   5,5-Dipropyl-1,3-di(butylphosphido)cyclohexantitandiisopropxoid
   5,5-Diisopropyl-1,3-di(butylphosphido)cyclohexantitandiisopropoxid
   5,5-Dibutyl-1,3-di(butylphosphido)cyclohexantitandiisopropoxid
   5,5-Di-sec.-butyl-1,3-di(butylphosphido)cyclohexantitandiisopropxoid
   5,5-Di-tert.-butyl-1,3-di(butylphosphido)cyclohexantitandiisopropoxid
   2,5,5-Trimethyl-1,3-di(methylamido)cyclohexantitandichlorid
   2,5,5-Trimethyl-1,3-di(ethylamido)cyclohexantitandichlorid
   2,5,5-Trimethyl-1,3-di(propylamido)cyclohexantitandichlorid
   2,5,5-Trimethyl-1,3-di(isopropylamido)cyclohexantitandichlorid
   2,5,5-Trimethyl-1,3-di(butylamido)cyclohexantitandichlorid
   2,5,5-Trimethyl-1,3-di(methylamido)cyclohexantitandimethyl
   2,5,5-Trimethyl-1,3-di(benzylamido)cyclohexantitandichlorid
   2,5,5-Trimethyl-1,3-di(methylamido)cyclohexantitandibenzyl
   2-Ethyl-5,5-dimethyl-1,3-di(methylamido)cyclohexantitandichlorid
   2-Ethyl-5,5-dimethyl-1,3-di(ethylamido)cyclohexantitandichlorid
   2-Ethyl-5,5-dimethyl-1,3-di(isopropylamido)cyclohexantitandichlorid
   2-Ethyl-5,5-dimethyl-1,3-di(propylamido)cyclohexantitandichlorid
   2-Ethyl-5,5-dimethyl-1,3-di(butylamido)cyclohexantitandichlorid
   2-Ethyl-5,5-dimethyl-1,3-di(methylamido)cyclohexantitandimethyl
   2-Ethyl-5,5-dimethyl-l,3-di(methylamido)cyclohexantitandibenzyl
   2-Butyl-5,5-dimethyl-1,3-di(methylamido)cyclohexantitandichlorid
   2-Butyl-5,5-dimethyl-1,3-di(ethylamido)cyclohexantitandichlorid
   2-Butyl-5,5-dimethyl-1,3-di(propylamido)cyclohexantitandichlorid
   2-Butyl-5,5-dimethyl-1,3-di(butylamido)cyclohexantitandichlorid
   2-Butyl-5,5-dimethyl-1,3-di(isopropylamido)cyclohexantitandichlorid
   2-Butyl-5,5-dimethyl-1,3-di(methylamido)cyclohexantitandimethyl
   2-Butyl-5,5-dimethyl-1,3-di(benzylamido)cyclohexantitandichlorid
   2-Butyl-5,5-dimethyl-1,3-di(methylamido)cyclohexantitandibenzyl
   2-Butyl-5,5-dimethyl-1,3-di(methylamido)cyclohexantitandibutyl
   2-Benzyl-5,5-dimethyl-1,3-di(methylamido)cyclohexantitandichlorid
   2-Benzyl-5,5-dimethyl-1,3-di(ethylamido)cyclohexantitandichlorid
   2-Benzyl-5,5-dimethyl-1,3-di(propylamido)cyclohexantitandichlorid
   2-Benzyl-5,5-dimethyl-1,3-di(isopropylamido)cyclohexantitandichlorid
   2-Benzyl-5,5-dimethyl-1,3-di(butylamido)cyclohexantitandichlorid
   2-Benzyl-5,5-dimethyl-1,3-di(benzylamido)cyclohexantitandichlorid
   2-Benzyl-5,5-dimethyl-1,3-di(methylamido)cyclohexantitandimethyl
   2-Benzyl-5,5-dimethyl-1,3-di(methylamido)cyclohexantitandibutyl
   2-Benzyl-5,5-dimethyl-1,3-di(methylamido)cyclohexantitandibenzyl
   2-Benzyl-5,5-dimethyl-1,3-di(benzylamido)cyclohexantitandimethyl
   2-Benzyl-5,5-dimethyl-1,3-di(benzylamido)cyclohexantitandibenzyl
   2-Benzyl-5,5-dimethyl-1,3-di(benzylamido)cyclohexantitandibutyl
   2-Benzyl-5,5-dimethyl-1,3-di(isopropylamido)cyclohexantitandimethyl.

Es können auch Mischungen verschiedener Metallkomplexe eingesetzt werden.

Die Metallkomplexe 1,3-Dimethylamido-5,5-dimethylcyclohexantitandichlorid, l,3-Dimethylamido-5,5-dimethylcyclohexantitandimethyl und 1,3-Di(isopropylamido)-2,5,5-trimethylcyclohexantitandichlorid sind besonders bevorzugt.

Die Metallkomplexe der allgemeinen Formel I können nach folgenden Verfahren hergestellt werden:

Eine Verbindung der allgemeinen Formel II 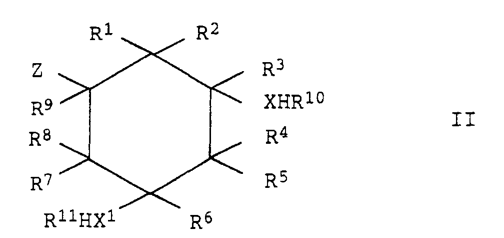 wird metalliert.

Vorzugsweise geht man so vor, daß eine Verbindung der allgemeinen Formel II mit Alkali- oder Erdalkalihydriden, -kohlenstofforganischen, -stickstofforganischen oder -siliciumorganischen Verbindungen umgesetzt wird und dann mit Halogen-, Alkoxy- oder Aryloxyverbindungen von M versetzt wird.

Verbindungen der allgemeinen Formel II lassen sich wie folgt herstellen:

Eine Verbindung der allgemeinen Formel V 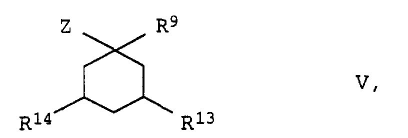 in der R¹³ und R¹⁴ für =O, =S oder =NR¹⁵
- mit R¹⁵: Wasserstoff, C₁- bis C₁₀-Alkyl oder C₄- bis C₆-Cycloalkyl stehen
kann gegebenenfalls mit Alkali- oder Erdalkalihydriden oder -amiden, kohlenstofforganischen oder siliciumorganischen Verbindungen, die auch Halogene enthalten können, zu Verbindungen der allgemeinen Formel IV umgesetzt werden 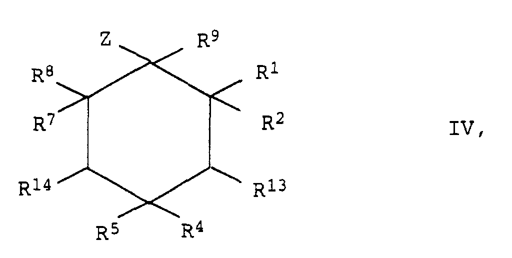 diese können gegebenenfalls zu Verbindungen der allgemeinen Formel III 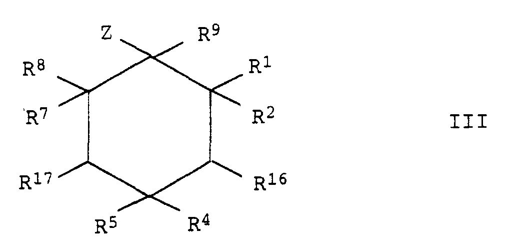 in denen R¹⁶ und R¹⁷ für -OH, -SH, -NHR¹⁵ stehen
reduziert werden,
diese können zu Verbindungen der allgemeinen Formel II umgesetzt werden, indem gegebenenfalls Tosylat-, Mesylat- oder Triflatgruppen eingeführt werden und anschließend mit Amin, Alkaliamid oder Alkaliphosphid vesetzt wird.

Verbindungen der allgemeinen Formel II können auch wie folgt hergestellt werden:

Eine Verbindung der allgemeinen Formel VI 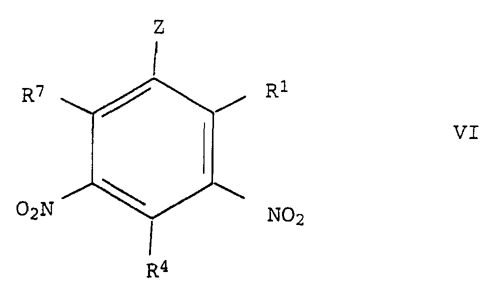 wird reduziert zu Verbindungen der allgemeinen Formel VII 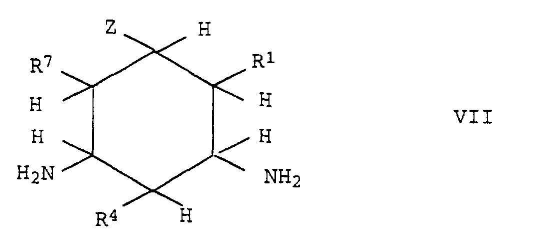 diese können gegebenenfalls am Stickstoff zu Verbindungen der allgemeinen Formel II alkyliert werden.

Bevorzugt geht man für die Herstellung von Verbindungen der allgemeinen Formel I so vor, daß man eine Verbindung der allgemeinen Formel II in einem Lösungsmittel wie THF, Diethylether, Dioxan oder Toluol, vorzugsweise in THF löst und bei Temperaturen im Bereich von -78 bis 60°C mit vorzugsweise 2,1 molaren Menge an Metallierungsreagenzien wie Alkalihydride, Butyllithium, Methyllithium, Phenyllithium, Natriumnaphtalin, Lithiumdiisopropylamid, Lithiumbistrimethylsilylamid, vorzugsweise Butyllithium umsetzt und anschließend mit Übergangsmetallhalogeniden, -alkoxiden oder -amiden bevorzugt -chloriden oder die Übergangsmetallchlorid-THF-Komplexe zur Reaktion bringt.

Gegebenenfalls können Verbindungen der allgemeinen Formel I durch Substitution der Halogenliganden an M modifiziert werden. Bevorzugt löst man Verbindungen der allgemeinen Formel I in Lösungsmitteln wie THF, Diethylether oder Toluol bei Temperaturen im Bereich von -78 bis 100°C und versetzt mit mindestens doppelt molarer Menge an Methylmagnesiumchlorid, Butyllithium, Methyllithium, Benzylmagnesiumbromid, man erhält so Alkyl- oder Arylalkylderivate von Verbindungen der allgemeinen Formel I.

Die Verbindungen der allgemeinen Formel II erhält man bevorzugt durch
A) gegebenenfalls Umsetzung von Verbindungen der allgemeinen Formel V mit Alkalihydriden, Butyllithium, Methyllithium, Phenyllithium, Natriumnaphtalin, Lithiumdiisopropylamid, Lithiumbistrimethylsilylamid, Alkalialkoholaten vorzugsweise Lithiumdiisopropylamid oder Kalium-tert.-butanolat in Lösungsmitteln wie THF, Diethylether, Dioxan, Toluol oder Alkoholen, vorzugsweise THF oder Butanol, bei Temperaturen im Bereich von -78 bis 65°C mit 1 bis 3,5 molarer Menge an Alkylhalogeniden, Trialkylsiliciumchloriden oder Arylalkylhalogeniden zu Verbindungen der allgemeinen Formel IV. Verbindungen der allgemeinen Formel IV können bevorzugt durch Umsetzung mit Lithiumaluminiumhydrid, Natriumborhydrid oder anderen gängigen Reduktionsmitteln, wobei die Menge an Reduktionsmittel im doppelt molaren Verhältnis bei -78 bis 100°C in THF, Diethylether, Dioxan oder Toluol zugesetzt wird, zu Verbindungen der allgemeinen Formel III reduziert werden. Verbindungen der Formel III können bevorzugt mit p-Toluolsulfonsäurechlorid, Trifluormethansulfonsäureanhydrid oder Methansulfonsäurechlorid, besonders bevorzugt mit Trifluormethansulfonsäureanhydrid in Gegenwart von 1 bis 2 molaren Mengen an Basen wie Pyridin, Chinolin oder Triethylamin in Lösungsmitteln wie THF, DMF, Acetonitril, Dimethylsulfoxid, Diethylether oder Methylenchlorid bei Temperaturen im Bereich von -78 bis 60°C umgesetzt werden. Die Zwischenverbindungen werden bevorzugt in situ mit Methylamin, Lithiumisopropylamid, Lithiummethylamid, Lithiumbutylphosphid, Lithiumphenylphoshid bei Temperaturen im Bereich von -78 bis 60°C zu Verbindungen der allgemeinen Formel II umgesetzt.
B) Bevorzugt erhält man Verbindungen der allgemeinen Formel VII, in dem Verbindungen der allgemeinen Formel VI in Lösungsmitteln wie THF, Toluol, Diethylether, Dioxan, Methanol bei Temperaturen im Bereich von -78 bis 120°C gegebenenfalls in Gegenwart von Wasserstoff mit Reduktionsmitteln wie Ni, Platin, Raney-Nickel oder Ruthenium reduziert werden.
   Gegebenenfalls können Verbindungen der allgemeinen Formel VII bevorzugt in Lösungsmitteln wie THF, Diethylether oder Toluol gelöst werden und bei Temperaturen im Bereich von -78 bis 80°C mit gängigen Alkylierungsmitteln, beispielsweise Methyliodid oder iso-Propylbromid zu Verbindungen der allgemeinen Formel II umgesetzt werden.
   Als metalloceniumionenbildende Verbindung B) können die erfindungsgemäßen Katalysatorsysteme offenkettige oder cyclische Alumoxanverbindungen enthalten.
   Geeignet sind beispielsweise offenkettige oder cyclische Alumoxanverbindungen der allgemeinen Formel VIII oder IX 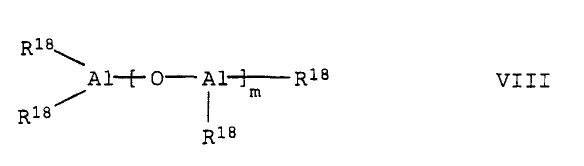 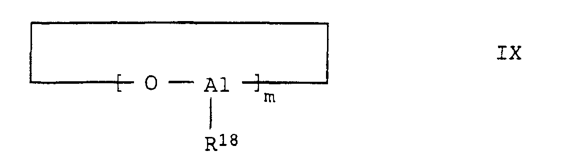
   - wobei R¹⁸: eine C₁- bis C₄-Alkylgruppe bedeutet, bevorzugt Methyl- oder Ethylgruppe und m für eine ganze Zahl von 5 bis 30, bevorzugt 10 bis 25 steht.

   Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.
   In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.
   Es hat sich als vorteilhaft erwiesen, die Metallkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallkomplexen im Bereich von 10:1 bis 10⁶:1, insbesondere im Bereich von 10:1 bis 10⁴:1, liegt.
   Als Lösungsmittel für diese Katalysatorsysteme werden üblicherweise aromatische Kohlenwasserstoffe eingesetzt, bevorzugt mit 6 bis 20 C-Atomen, insbesondere Xylole und Toluol sowie deren Mischungen.
   Als metalloceniumionenbildende Verbindung B) können auch Koordinationskomplexverbindungen, ausgewählt aus der Gruppe der starken, neutralen Lewissäuren, der ionischen Verbindungen mit lewissauren Kationen und der ionischen Verbindungen mit Brönstedsäuren als Kationen eingesetzt werden.
   Als starke neutrale Lewissäuren sind Verbindungen der allgemeinen Formel X

   M²X²X³X⁴ X

   bevorzugt, in der
   - M2: ein Element der III. Hauptgruppe des Periodensystems bedeutet, insbesondere B, A1 oder Ga, vorzugsweise B,
   - X²,X³ und X⁴: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

   Besonders bevorzugt sind Verbindungen der allgemeinen Formel X, in der X², X³ und X⁴ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.
   Als ionische Verbindungen mit lewissauren Kationen sind Verbindungen der allgemeinen Formel XI

   [(A^{a+})Q₁Q₂...Q_{z}]^{d+} XI

   geeignet, in denen
   - A: ein Element der I. bis VI. Hauptgruppe oder der I. bis VIII. Nebengruppe des Periodensystems bedeutet,
   - Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
   - a: für ganze Zahlen von 1 bis 6 steht,
   - Z: für ganze Zahlen von 0 bis 5
   - d: der Differenz a - z entspricht, wobei d jedoch größer oder gleich 1 ist.

   Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen.
   Bevorzugt besitzen sie nicht koordinierende Gegenionen, insbesondere Borverbindungen, wie sie auch in der WO 91/09882 genannt werden, bevorzugt Tetrakis(pentafluorophenyl)borat.
   Ionische Verbindungen mit Brönsted-Säuren als Kationen und vorzugsweise ebenfalls nicht koordinierende Gegenionen sind in der WO 93/3067 genannt, bevorzugtes Kation ist das N,N-Dimethylanilinium.
   Es hat sich als besonders geeignet erwiesen, wenn das molare Verhältnis von Bor aus der metalloceniumionenbildenden Verbindung zu Übergangsmetall aus dem Metallkomplex im Bereich von 0,1:1 bis 10:1 liegt, insbesondere im Bereich von 1:1 bis 5:1.
   Die erfindungsgemäßen Katalysatorsysteme können ungeträgert oder geträgert eingesetzt werden.
   Geeignete Trägermaterialien sind beispielsweise Kieselgele, bevorzugt solche der Formel SiO₂ · bAl₂O₃, worin b für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200 µm auf, insbesondere 30 bis 80 µm. Derartige Produkte sind im Handel erhältlich, z.B. als Silica Gel 332 der Firma Grace.
   Weitere Träger sind u.a. feinteilige Polyolefine, beispielsweise feinteiliges Polypropylen oder Polyethylen, aber auch Polyethylenglycol, Polybutylenterephthalat, Polyethylenterephthalat, Polyvinylakohol, Polystyrol, Polybutadien, Polycarbonate oder deren Copolymere.
   Den erfindungsgemäßen Katalysatorsystemen können noch Trialkylaluminiumverbindungen zugesetzt werden. Bevorzugt sind Triisobutylaluminium, Trimethylaluminium, Triethylaluminium und Mischungen davon. Die molare Menge an diesen Verbindungen beträgt vorzugsweise 0,1:1 bis 10⁴:1, bezogen auf das Katalysatorsystem.
   Die erfindungsgemäßen Katalysatorsysteme können zur Polymerisation von olefinisch ungesättigten, insbesondere von vinylaromatischen Verbindungen verwendet werden. Es können Homooder Copolymerisate von vinylaromatischen Verbindungen hergestellt werden. Zur Herstellung von Copolymerisaten werden vorzugsweise olefinische Verbindungen als Comonomere eingesetzt.
   Als vinylaromatische Verbindungen eignen sich beispielsweise solche der allgemeinen Formel 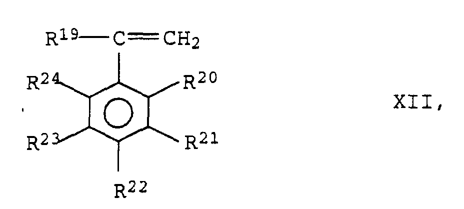 in der die Substituenten folgende Bedeutung haben:
   - R¹⁹: Wasserstoff oder C₁- bis C₄-Alkyl,
   - R²⁰ bis R²⁴: unabhängig voneinander Wasserstoff, C₁- bis C₁₂-Alkyl, C₂- bis C₄-Alkenyl, C₆- bis C₁₈-Aryl, Halogen oder wobei zwei benachbarte Reste gemeinsam für 4 bis 15 C-Atome aufweisende cyclische Gruppen stehen.

   Bevorzugt werden vinylaromatische Verbindungen der Formel XII eingesetzt, in denen
   R¹⁹ Wasserstoff bedeutet
   und
   - R²⁰ bis R²⁴: für Wasserstoff, C₁- bis C₄-Alkyl, Chlor oder Phenyl stehen oder wobei zwei benachbarte Reste gemeinsam für 4 bis 12 C-Atome aufweisende cyclische Gruppen stehen, so daß sich als Verbindungen der allgemeinen Formel XII beispielsweise Naphthalinderivate oder Anthracenderivate ergeben.

   Beispiele für solche bevorzugten Verbindungen sind:
   Styrol, p-Methylstyrol, p-Chlorstyrol, 2,4-Dimethylstyrol, 1,4-Divinylbenzol, 4-Vinylbiphenyl, 2-Vinylnaphthalin oder 9-Vinylanthracen.
   Es können auch Mischungen verschiedener vinylaromatischer Verbindungen eingesetzt werden, vorzugsweise wird jedoch nur eine vinylaromatische Verbindung verwendet.
   Besonders bevorzugte vinylaromatische Verbindungen sind Styrol und p-Methylstyrol.
   Die Herstellung von vinylaromatischen Verbindungen der allgemeinen Formel XII ist an sich bekannt und beispielsweise in Beilstein 5, 367, 474, 485 beschrieben.
   Als vinylaromatische Verbindungen eignen sich auch 1,1-Diphenylethen und dessen Derivate.
   Als olefinische Verbindungen können beispielsweise Ethylen oder C₃- bis C₂₀-Alkene, insbesondere C₃- bis C₁₈-Alk-1-ene eingesetzt werden. Bevorzugt sind Ethylen, Propylen, But-1-en, Isobuten, 4-Methyl-pen-1-en, Hex-1-en, Oct-1-en, Octadec-1-en und Mischungen hiervon. Besonders bevorzugt ist Ethylen.
   Als Comonomere sind aber auch Diene wie Butadien, 2-Methylbutadien oder 1,5-Hexadien geeignet, sowie cyclische Verbindungen wie Norbornen, Cyclohexen, Cyclooctadien oder Mischungen davon.
   Das molare Verhältnis von Comonomeren zu vinylaromatischen Verbindungen kann in weiten Bereichen variiert werden, vorzugsweise liegt es im Bereich von 0,01:1 bis 50:1.
   Die Polymerisationsbedingungen sind an sich unkritisch, vorzugsweise arbeitet man bei Drücken im Bereich von 0,1 bis 100 bar, insbesondere von 1 bis 50 bar, bei Temperaturen im Bereich von 0 bis 150°C, insbesondere von 40 bis 100°C und polymerisiert 1 bis 10 Stunden.
   Die Polymerisation kann durch Zugabe von protischen Verbindungen, beispielsweise Methanol, abgebrochen werden. Das Polymerisat kann durch Ausfällen in überschüssigen Methanol abgetrennt werden.
   Vorzugsweise wird in Masse, beispielsweise in Styrol, Propen, Buten oder Hexen, oder in Lösung polymerisiert. Geeignete Lösungsmittel sind aliphatische oder aromatische Kohlenwasserstoffe, beispielsweise Butan, Pentan, Hexan, Cyclohexan, Toluol, Xylole, Ethylbenzol oder Gemische daraus.
   Die erfindungsgemäßen Katalysatorsysteme können zur Polymerisation von ethylenisch ungesättigten, insbesondere von vinylaromatischen Verbindungen eingesetzt werden und unterdrücken dabei wirkungsvoll eine β-Hydrid-Eliminierung. Außerdem sind sie stereoselektiv.
   Die entstehenden Polymerisate weisen ein hohes Molekulargewicht auf und einen gegebenenfalls hohen Anteil an syndiotaktischer Struktur, d.h. der syndiotaktische Anteil bestimmt nach ¹³C-NMR ist größer als 50 %, bevorzugt größer als 60 %, insbesondere größer als 85 % bei den Homopolymerisaten von vinylaromatischen Verbindungen.
   In den Copolymerisaten liegt der Anteil an vinylaromatischen Verbindungen vorzugsweise bei 1 bis 85 mol-%, insbesondere bei 10 bis 50 mol-%.
   Die Polymerisate eignen sich zur Herstellung von Fasern, Folien und Formkörpern.

### Beispiele

### Beispiel 1

### Darstellung von 1,3-Dimethylamido-5,5-dimethylcyclohexantitandichlorid I1

e) 5,5-Dimethylcyclohexan-1,3-diol
   14,0 g (0,1 mol) Dimedon wurden in 200 ml THF gelöst. Weiterhin wurden 3,8 g (0,1 mol) NaBH₄ und 5 mmol CeCl₃ gelöst in 50 ml THF bei -30°C zugefügt. Die Mischung wurde noch 2 h bei Raumtemperatur gerührt und bei 0°C mit Methanol/Wasser hydrolysiert. Die organische Phase wurde abgetrennt und das Lösungsmittel entfernt. Der Rückstand wurde mit Ethanol extrahiert und unumgesetztes Dimedon durch Kristallisation entfernt. Es entstand 11,5 g (80 %) 5,5-Dimethylcyclohexan-1,3-diol.
f) 5,5-Dimethylcyclohexan-1,3-ditosylat
   Eine Lösung aus 10,8 g (75 mmol) 5,5-Dimethylcyclohexan-1,3-diol und 26,7 g (0,14 mol) p-Toluolsulfonsäurechlorid in 180 ml Methylenchlorid wurde bei 0°C vorsichtig mit 0,28 mol absolutem Pyridin versetzt. Nach Erwärmen wurde noch 2 h bei Raumtemperatur gerührt und anschließend durch Zugabe von 100 g Eis und 30 ml konz. Schwefelsäure hydrolysiert. Die organische Phase wurde abgetrennt und das Lösungsmittel im Vakuum entfernt. Das Rohprodukt wurde aus Methylenchlorid/ Diethylether umkristallisiert. Ausbeute: 22,2 g (70 %).
g) 1,3-Dimethylamino-5,5-dimethylcyclohexan
   20,3 g (45 mmol) 5,5-Dimethylcyclohexan-1,3-ditosylat wurde in 200 ml Ethanol/Wasser gelöst und mit 90 mmol wässrigem Methylamin versetzt. Die Mischung wurde 12 h bei Raumtemperatur gerührt. Nach Zugabe von Natriumbicarbonat wurde die Lösung mehrmals mit Diethylether extrahiert. Die Etherextrakte wurden zur Trockene eingeengt und das Rohprodukt mit Wasser gewaschen. Ausbeute: 6,1 g (79 %).
h) 1,3-Dimethylamido-5,5-dimethylcyclohexantitandichlorid I1
   5,1 g (30 mmol) 1,3-Dimethylamino-5,5-dimethylcyclohexan wurden in 75 ml THF bei -78°C gelöst und mit 60 mmol n-Butyllithium versetzt. Die Mischung wurde auf Raumtemperatur erwärmt und 12 h gerührt. Das Lösungsmittel wurde entfernt und der Rückstand wurde mehrmals mit Diethylether digeriert. Die entstandene 1,3-Dimethylamido-5,5-dimethylcyclohexandilithium-Verbindung wurde erneut bei -78°C in 75 ml absolutem THF gelöst und mit einer Lösung von 5,9 g (31 mmol) TiCl₄ in 15 ml THF versetzt. Die Kühlung wurde entfernt und weitere 15 h gerührt. Das ausgefallene LiCl wurde abfiltriert und die THF-Lösung am Vakuum eingeengt. Das zurückgebliebene Öl wurde aus Diethylether/THF umkristallisiert, wobei ein kristalliner Feststoff entstand. Ausbeute: 6,7 g (78 %).

### Beispiele 2 bis 6

### Herstellung von syndiotaktischem Polystyrol

Der Metallkomplex I1 wurde in 5 ml einer 0,1 molaren Lösung von Triisobutylaluminium in Toluol gelöst und zu einer Mischung aus Styrol und einer 1,53 molaren Lösung von Methylalumoxan in Toluol (MAO) gegeben. Anschließend wurde in einem Kneter polymerisiert und durch Zugabe von 15 ml Methanol abgebrochen.

Die Versuchsbedingungen und Ergebnisse sind in Tabelle 1 zusammengestellt.

Der syndiotaktische Anteil (rr 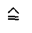 rr-Triaden) wurde durch ¹³C-NMR ermittelt.

Die mittleren Molekulargewichte M_{w} (Gewichtsmittelwert) wurden mittels Gelpermeationschromatographie gegenüber Polystyrol-Standard bei 135°C in 1,2,4-Trichlorbenzol bestimmt.

**Tabelle 1:**

| Bsp | I1 [mg] | Temperatur [°C] | Styrol [g] | MAO [ml] | Polymerisationszeit [min] | Ausbeu te [g] | rr [%] | M_{w} |
|---|---|---|---|---|---|---|---|---|
| 2 | 14,3 | 60 | 910 | 9,8 | 30 | 591 | 89 | 590.000 |
| 3 | 7,2 | 60 | 910 | 4,9 | 45 | 546 | 90 | 720.000 |
| 4 | 2,9 | 60 | 455 | 3,3 | 60 | 205 | 90 | 740.000 |
| 5 | 28,6 | 60 | 910 | 19,6 | 30 | 637 | 86 | 620.000 |
| 6 | 14,3 | 50 | 910 | 9,8 | 30 | 437 | 92 | 850.000 |

### Beispiele 7 bis 11

### Herstellung von Copolymerisaten von Styrol und Ethylen

Ein Gemisch aus Styrol und einer 1,53 molaren Lösung von Methylalumoxan in Toluol (MAO) wurden ggf. mit Toluol als Lösungsmittel in einen 2 1-Druckautoklaven gegeben. Die Temperatur wurde auf 60°C erhöht und Ethylen aufgepreßt. Hierzu wurde eine Mischung aus 20 µmol I1 und 5 ml einer 0,1 molaren Lösung von Triisobutylaluminium in Toluol gegeben. Die Ethylenzufuhr wurden so eingestellt, daß der Ethylendruck konstant blieb. Die Polymerisation wurde durch Zugabe von 20 ml Methanol abgebrochen und das Polymerisat durch Ausfällen in überschüssigem, HCl-haltigem Methanol erhalten.

Die Versuchsbedingungen und Ergebnisse sind in Tabelle 2 zusammengestellt.

Der Gehalt an Styrol im Polymerisat wurde durch quantitative Auswertung der ¹³C-NMR Spektren ermittelt. Der Gewichtsmittelwert M_{w} wurde mittels GPC (Gelpermeationschromatographie) gegen Polystyrol-Standard in Trichlorbenzol bei 120°C bestimmt.

**Tabelle 2:**

| Bsp | Menge an eingesetztem Styrol [g] | MAO [ml] | Toluol [g] | Ethylendruck [bar] | Polymerisationszeit [min] | Ausbeute [g] | Gehalt an Styrol in Polymerisat [mol-%] | M_{w} |
|---|---|---|---|---|---|---|---|---|
| 7 | 172 | 7,8 | 1100 | 5 | 60 | 190 | 17 | 190000 |
| 8 | 172 | 7,8 | 1100 | 2 | 60 | 134 | 25 | 124000 |
| 9 | 344 | 7,8 | 627 | 2 | 45 | 148 | 29 | 118000 |
| 10 | 31 | 15,6 | 1150 | 15 | 15 | 324 | 9 | 354000 |
| 11 | 1365 | 15,6 | - | 5 | 60 | 105 | 19 | 130000 |

## Patentansprüche

1. Katalysatorsysteme, enthaltend als aktive Bestandteile
A) Metallkomplexe der allgemeinen Formel I 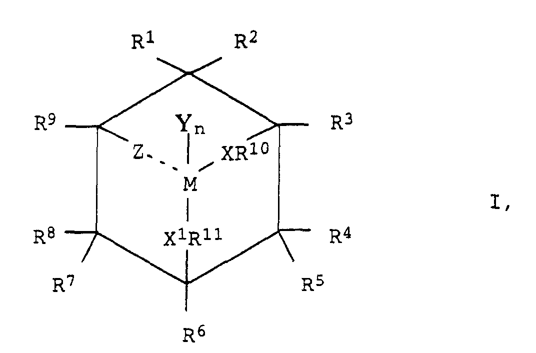 in der die Substituenten folgende Bedeutung haben:
M ein Metall der III., IV., V. oder VI. Nebengruppe des Periodensystems der Elemente oder ein Metall der Lanthanoidenreihe,
Y ein negatives Abgangsatom oder eine negative Abgangsgruppe,
X und X¹ ein negativ geladenes oder neutrales Atom der IV., V. oder VI. Hauptgruppe des Periodensystems der Elemente,
Z Wasserstoff, C₁- bis C₁₀-Alkyl, C₃- bis C₁₀-Cycloalkyl, C₁- bis C₁₀-Alkoxy, C₁- bis C₁₀-Alkylthiolat oder Dialkylamid mit jeweils 1 bis 4 C-Atomen im Alkylrest,
R¹ bis R¹¹ Wasserstoff, kohlenstofforganische oder siliciumorganische Reste,
n 0, 1 oder 2
und
die Wertigkeit von M (2+n) ist
und
B) eine metalloceniumionenbildende Verbindung.

2. Katalysatorsysteme nach Anspruch 1, **dadurch gekennzeichnet, daß** M in der allgemeinen Formel I für ein Metall der IV. oder V. Nebengruppe des Periodensystems der Elemente steht.

3. Katalysatorsysteme nach den Ansprüchen 1 bis 2, **dadurch gekennzeichnet, daß** Y in der allgemeinen Formel I für Wasserstoff, C₁- bis C₁₀-Alkyl, C₃- bis C₁₀-Cycloalkyl, C₁- bis C₁₀-Alkoxy, Dialkylamid, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Iod steht.

4. Katalysatorsysteme nach den Ansprüchen 1 bis 3, **dadurch gekennzeichnet, daß** X und X¹ in der allgemeinen Formel I für ein negativ geladenes Atom der V. oder VI. Hauptgruppe des Periodensystems der Elemente stehen.

5. Katalysatorsysteme nach den Ansprüchen 1 bis 4, **dadurch gekennzeichnet, daß** Z in der allgemeinen Formel I für Wasserstoff oder C₁- bis C₄-Alkyl oder C₃- bis C₆-Cycloalkyl steht.

6. Katalysatorsysteme nach den Ansprüchen 1 bis 5, **dadurch gekennzeichnet, daß** als metalloceniumionenbildende Verbindung B) offenkettige oder cyclische Alumoxanverbindungen der allgemeinen Formel VIII oder IX 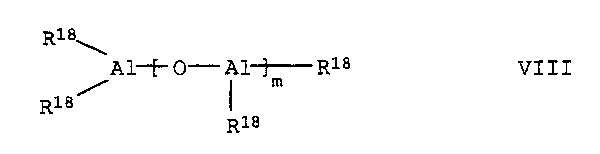 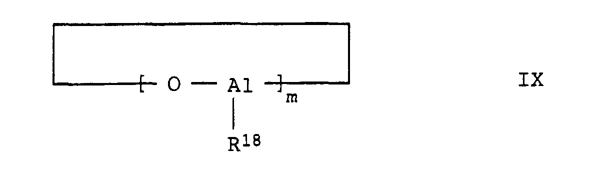
wobei R¹⁸ eine C₁- bis C₄-Alkylgruppe bedeutet und m für eine ganze Zahl von 5 bis 30 steht,
eingesetzt werden.

7. Katalysatorsysteme nach den Ansprüchen 1 bis 5, **dadurch gekennzeichnet, daß** als metalloceniumionenbildende Verbindung B) eine Koordinationskomplexverbindung, ausgewählt aus der Gruppe der starken, neutralen Lewissäuren, der ionischen Verbindungen mit lewissauren Kationen und der ionischen Verbindungen mit Brönsted-Säuren als Kationen eingesetzt wird.

8. Verwendung der Katalysatorsysteme gemäß den Ansprüchen 1 bis 7 zur Polymerisation von olefinisch ungesättigten Verbindungen.

9. Verfahren zur Herstellung von Polymerisaten von vinylaromatischen Verbindungen bei Drücken von 0,1 bis 100 bar und Temperaturen von 0 bis 150°C mit Hilfe eines Katalysatorsystems, **dadurch gekennzeichnet, daß** man Katalysatorsysteme gemäß den Ansprüchen 1 bis 7 verwendet.

## Claims

1. A catalyst system comprising as active constituents
A) Metal complexes of the formula I 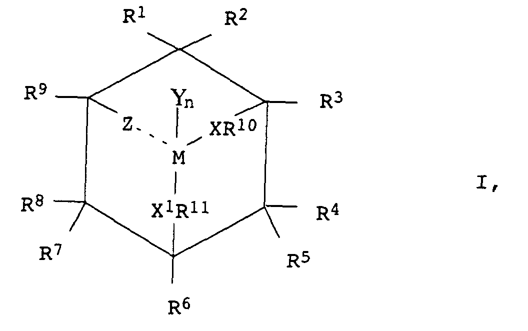 where the substituents have the following meanings:
M is a metal of transition group III, IV, V or VI of the Periodic Table of the Elements or a metal of the lanthanide series,
Y is a negative leaving atom or a negative leaving group,
X and X¹ are negatively charged or uncharged atoms of main group IV, V or VI of the Periodic Table of the Elements,
Z is hydrogen, C₁-C₁₀-alkyl, C₃-C₁₀-cycloalkyl, C₁-C₁₀-alkoxy, C₁-C₁₀-alkylthio or dialkylamido having from 1 to 4 carbon atoms in each alkyl radical,
R¹ to R¹¹ are hydrogen, carboorganic or organosilicon radicals,
n is 0, 1 or 2
and
the valence of M is 2+n,
and
B) a compound capable of forming metallocenium ions.

2. A catalyst system as claimed in claim 1, wherein M in the formula I is a metal of transition group IV or V of the Periodic Table of the Elements.

3. A catalyst system as claimed in claim 1 or 2, wherein Y in the formula I is hydrogen, C₁-C₁₀-alkyl, C₃-C₁₀-cycloalkyl, C₁-C₁₀-alkoxy, dialkylamido, alkylaryl, arylalkyl, haloalkyl or haloaryl each having from 1 to 10 carbon atoms in the alkyl radical and from 6 to 20 carbon atoms in the aryl radical, or fluorine, chlorine, bromine or iodine.

4. A catalyst system as claimed in any of claims 1 to 3, wherein X and X¹ in the formula I are each a negatively charged atom of main group V or VI of the Periodic Table of the Elements.

5. A catalyst system as claimed in any of claims 1 to 4, wherein Z in the formula I is hydrogen or C₁-C₄-alkyl or C₃-C₆-cycloalkyl.

6. A catalyst system as claimed in any of claims 1 to 5, wherein the compound B) capable of forming metallocenium ions which is used comprises open-chain or cyclic aluminoxane compounds of the formula VIII or IX 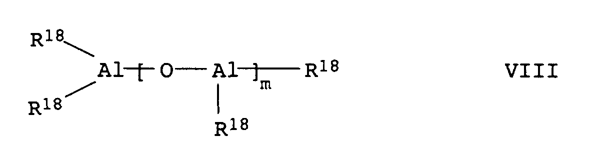 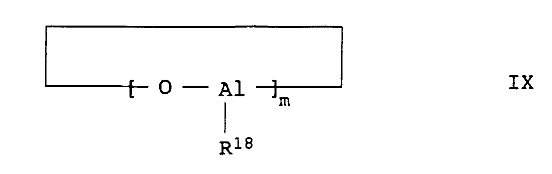 where
R¹⁸ is a C₁-C₄-alkyl group and m is an integer from 5 to 30.

7. A catalyst system as claimed in any of claims 1 to 5, wherein the compound B) capable of forming metallocenium ions which is used is a coordination compound selected from the group consisting of strong, uncharged Lewis acids, ionic compounds containing Lewis-acid cations and ionic compounds containing Brönsted acids as cations.

8. The use of a catalyst system as claimed in any of claims 1 to 7 for polymerizing olefinically unsaturated compounds.

9. A process for preparing polymers of vinylaromatic compounds at from 0 to 150°C and pressures of from 0.1 to 100 bar with the aid of a catalyst system as claimed in any of claims 1 to 7.

## Revendications

1. Systèmes catalyseurs contenant en tant que constituants actifs
A) des complexes métalliques de formule générale I 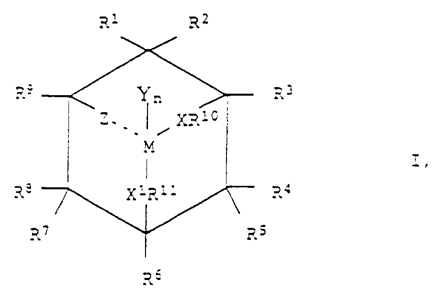 dans laquelle les symboles ont les significations suivantes :
M un métal du sous-groupe III, IV, V ou VI de la Classification Périodique des Eléments ou un métal de la série des lanthanoïdes,
Y un atome négatif éliminable ou un groupe négatif éliminable,
X et X¹ représentent chacun un atome chargé négativement ou neutre du groupe principal IV, V ou VI de la Classification Périodique des Eléments,
Z représente l'hydrogène, un groupe alkyle en C1-C10, cycloalkyle en C3-C10, alcoxy en C1-C10, alkylthiolate en C1-C10 ou dialkylamide contenant un à quatre atomes de carbone dans chaque groupe alkyle,
R¹ à R¹¹ représentent l'hydrogène, des radicaux organiques carbonés ou des radicaux organiques siliciés,
n est égal à 0, 1 ou 2
et
la valence de M est (2+n),
et
B) un composé formant des ions métallocénium.

2. Systèmes catalyseurs selon la revendication 1, **caractérisés par le fait que**, dans la formule générale I, M représente un métal du sous-groupe IV ou V de la Classification Périodique.

3. Systèmes catalyseurs selon les revendications 1 à 2, **caractérisés par le fait que**, dans la formule générale I, Y représente l'hydrogène, un groupe alkyle en C1-C10, cycloalkyle en C3-C10, alcoxy en C1-C10, dialkylamide, alkylaryle, arylalkyle, halogénoalkyle ou halogénoaryle contenant chacun un à dix atomes de carbone dans la partie alkyle et six à vingt atomes de carbone dans la partie aryle, ou le fluor, le chlore, le brome ou l'iode.

4. Systèmes catalyseurs selon les revendications 1 à 3, **caractérisés par le fait que**, dans la formule générale I, X et X¹ représentent chacun un atome chargé négativement du groupe principal V ou VI de la Classification Périodique des Eléments.

5. Systèmes catalyseurs selon les revendications 1 à 4, **caractérisés par le fait que**, dans la formule générale I, Z représente l'hydrogène ou un groupe alkyle en C1-C4 ou cycloalkyle en C3-C6.

6. Systèmes catalyseurs selon les revendications 1 à 5, **caractérisés par le fait que** l'on utilise en tant que composés formant des ions métallocénium B des dérivés acycliques ou cycliques d'alumoxanes de formule générales VIII ou IX 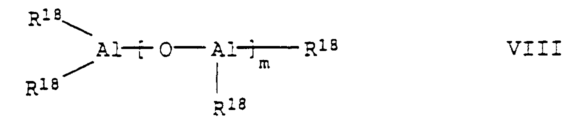 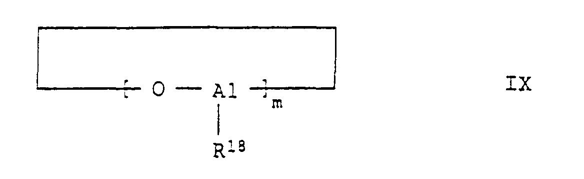 dans lesquelles R¹⁸ représente un groupe alkyle en C1-C4 et m est un nombre entier allant de 5 à 30.

7. Systèmes catalyseurs selon les revendications 1 à 5, **caractérisés par le fait que** l'on utilise en tant que composé formant des ions métallocénium B un complexe de coordination choisi dans le groupe des acides de Lewis neutres forts, des dérivés ioniques à cations acides de Lewis et des dérivés ioniques à cations acides de Brönsted.

8. Utilisation des systèmes catalyseurs selon les revendications 1 à 7 pour la polymérisation de composés à insaturation oléfinique.

9. Procédé pour la préparation de polymères de composés vinylaromatiques à des pressions de 0,1 à 100 bar et des températures de 0 à 150°C à l'aide d'un système catalyseur, **caractérisé par le fait que** l'on utilise un système catalyseur selon les revendications 1 à 7.
